# EUROPÄISCHE PATENTSCHRIFT

(11) **EP 2 933 209 B1**
(45) Veröffentlichungstag und Bekanntmachung des Hinweises auf die Patenterteilung: **01.11.2017**
(21) Anmeldenummer: 15162249.5
(22) Anmeldetag: 01.04.2015
(51) Int. Cl.: B65G 47/28, B65G 47/82, B65G 33/04, B65G 47/71

(54) **VORRICHTUNG UND VERFAHREN ZUM ÜBERFÜHREN VON BEHÄLTERN AN EINE BEHANDLUNGSMASCHINE**
METHOD AND DEVICE FOR TRANSFERRING CONTAINERS TO A PROCESSING MACHINE
DISPOSITIF ET PROCÉDÉ DE TRANSFERT DE RÉCIPIENTS SUR UNE MACHINE DE TRAITEMENT

(30) Priorität: 04.04.2014 DE 102014104810
(43) Veröffentlichungstag der Anmeldung: 21.10.2015
(73) Patentinhaber: Groninger GmbH&Co. KG, 91625 Schnelldorf (DE)
(72) Erfinder: Glock, Ralf, 74594 Kressberg/Rudolfsberg (DE); Steck, Michael, 74582 Gerabronn/Amlishagen (DE)
(74) Vertreter: Witte, Weller & Partner Patentanwälte mbB

(56) Entgegenhaltungen:
- EP-A1- 2 394 915
- DE-A1- 3 149 307
- US-A- 4 290 517
- US-A- 6 035 995
- US-B1- 6 386 353

## Beschreibung

Die Erfindung betrifft eine Vorrichtung zum Überführen von Behältern an eine die Behälter in Gruppen taktweise behandelnde Behandlungsmaschine.

Ferner betrifft die Erfindung ein System mit einer Behandlungsmaschine zur taktweisen Behandlung einer Gruppe von Behältern, und einer Vorrichtung der oben genannten Art.

Ferner betrifft die Erfindung ein Verfahren zum Überführen von Behältern an eine die Behälter in Gruppen taktweise behandelnde Behandlungsmaschine.

Das oben genannte System dient beispielsweise der Verarbeitung pharmazeutischer und/oder kosmetischer fluider Medien. Jedoch sind auch andere Einsatzbereiche vorstellbar.

Es ist allgemein üblich, an Behandlungsmaschinen, wie z.B. Füllmaschinen, Verschließmaschinen und/oder Etikettiermaschinen einen sogenannten Vortisch bzw. einen Transportelemente aufweisenden Maschinenbereich vorzusehen, über welchen die zu behandelnden Behälter der Behandlungsmaschine zugeführt werden. Der Vortisch bildet somit den eigentlichen Behältereinlauf des aus Vortisch und Behandlungsmaschine bestehenden Gesamtsystems. Dabei kann bei dem Vortisch beispielsweise ein Förderband zum Fördern der Behälter vorgesehen sein. Das Vereinzeln der Behälter bzw. das Einstellen eines entsprechenden Teilungsabstands zwischen den Behältern erfolgt üblicherweise durch eine Förderschnecke. Die Förderschnecke ist in der Regel parallel zu dem Förderband angeordnet und weist Schneckengänge mit einer Steigung auf, die die Behälter auf einen bestimmten der Teilung der Behandlungsmaschine entsprechenden Teilungsabstand einstellt. Je größer der Abstand der Behälter sein soll, desto größer muss die Steigung der Förderschnecke bei gleicher Länge der Förderschnecke sein. Die größere Steigung der Schneckengänge führt jedoch zu einer sehr labilen Behälterführung. Alternativ muss die Förderschnecke eine größere Länge aufweisen, wenn ein größerer Teilungsabstand zwischen den Behältern eingestellt werden soll. Dadurch entsteht jedoch ein erhöhter Platzbedarf für das Gesamtsystem. Ferner besitzt die Förderschnecke üblicherweise einen Antrieb, der sich in Verlängerung der Förderschnecke zum Vortisch der Behandlungsmaschine befindet. Allerdings ist es schwierig, den Antrieb für die Förderschnecke im Vortisch der Behandlungsmaschine anzubringen.

Hinter der Förderschnecke, in Förderrichtung gesehen, befindet sich üblicherweise ein Einlaufstern, der an seinem Umfang mehrere zu diesem Umfang hin offene und in gleichen Winkelabständen verteilte Ausnehmungen (Taschen) zur Aufnahme der Behälter besitzt. Die Behälter werden von der Förderschnecke mit dem vorgegebenen Teilungsabstand in die Taschen des Einlaufsterns gefördert. Die aufgenommenen Behälter werden von dem Einlaufstern auf einer teilkreisförmigen Förderstrecke bewegt. Um hierbei die Behälter in den Ausnehmungen des Einlaufsterns zu halten, ist an der teilkreisförmigen Förderstrecke des Einlaufsterns in der Regel ein Sicherungselement vorgesehen, das den Einlaufstern auf seiner teilkreisförmigen Förderstrecke umschließt. Dabei kann das Sicherungselement beispielsweise als ein äußeres Führungsgeländer ausgebildet sein. Um einen sicheren Halt der Behälter in den Ausnehmungen des Einlaufstands zu gewährleisten, muss der Abstand zwischen dem Führungsgeländer und dem Einlaufstern an die Abmessungen der zu befördernden Behälter angepasst werden. Bei einem Wechsel der Behältergröße muss daher beispielsweise auch das entsprechende Führungsgeländer ausgewechselt werden. Daher entsteht bei der bekannten Anordnung aus Förderschnecke und nachgeschaltetem Einlaufstern ein erhöhter Umrüstaufwand, sofern die Behältergröße gewechselt wird. Dies wiederum führt zu erhöhten Kosten bei der Umrüstung des Gesamtsystems.

Die Druckschrift EP 2 294 915 A1 zeigt eine Maschine zum Füllen und Verschließen von Vials, mit einer Archimedes-Schraube, aus der mit einer Einrichtung eine bestimmte Anzahl von Vials angebracht wird. Die zweiteilige Fassung der Patentansprüche wurde mit Blick auf die Druckschrift EP 2 294 915 A1 aufgestellt.

Es ist daher die Aufgabe der vorliegenden Erfindung, eine verbesserte Vorrichtung, ein System mit einer derartigen Vorrichtung und ein verbessertes Verfahren zum Überführen von Behältern an eine die Behälter in Gruppen taktweise behandelnde Behandlungsmaschinen anzugeben, die zumindest einige der oben genannten Nachteile adressieren.

Diese Aufgabe wird gelöst durch ein System mit einer Behandlungsmaschine zur taktweisen Behandlung einer Gruppe von Behältern, und mit einer Vorrichtung zum Überführen von Behältern an eine die Behälter in Gruppen taktweise behandelnde Behandlungsmaschine, mit einer Fördereinheit zum Transportieren der Behälter in einer Förderrichtung, wobei die Fördereinheit einen Schiebeabschnitt aufweist, in dem eine Gruppe von Behältern in einer quer zu der Förderrichtung ausgerichteten Schieberichtung zu der Behandlungsmaschine verschiebbar ist, einer Schiebeeinrichtung zum Verschieben der Gruppe von Behältern in Schieberichtung von der Fördereinheit zu der Behandlungsmaschine, und mit einer Förderschnecke zum Einstellen eines für die Behandlung der Gruppe von Behältern in der Behandlungsmaschine erforderlichen Teilungsabstands zwischen den Behältern, wobei die Förderschnecke entlang der Fördereinheit ausgerichtet ist, wobei die Förderschnecke zumindest teilweise in den Schiebeabschnitt hineinragt, und wobei die Förderschnecke zumindest einen Aussparungsbereich aufweist, in dem die Förderschnecke einen verringerten Außenumfang aufweist, eine Fördereinheit zum Transportieren der Behälter in einer Förderrichtung, wobei die Fördereinheit einen Schiebeabschnitt aufweist, in dem eine Gruppe von Behältern in einer quer zu der Förderrichtung ausgerichteten Schieberichtung zu der Behandlungsmaschine verschiebbar ist, eine Schiebeeinrichtung zum Verschieben der Gruppe von Behältern in Schieberichtung von der Fördereinheit zu der Behandlungsmaschine, und eine Förderschnecke zum Einstellen eines für die Behandlung der Gruppe von Behältern in der Behandlungsmaschine erforderlichen Teilungsabstands zwischen den Behältern, wobei die Förderschnecke entlang der Fördereinheit ausgerichtet ist, wobei die Förderschnecke zumindest teilweise in den Schiebeabschnitt hineinragt, und wobei die Förderschnecke zumindest einen Aussparungsbereich aufweist, in dem die Förderschnecke einen verringerten Außenumfang aufweist, wobei die Schiebeeinrichtung zum Verschieben zumindest eines von der Gruppe von Behältern von der Fördereinheit zu der Behandlungsmaschine derart angeordnet ist, dass sie in Schieberichtung zumindest abschnittsweise durch den Aussparungsbereich hindurchführbar ist, wobei die Förderschnecke eine Mehrzahl von Aussparungsbereichen aufweist, wobei die Anzahl der Aussparungsbereiche der doppelten Anzahl der Behälter in der Gruppe von Behältern entspricht.

Ferner wird die obige Aufgabe gelöst durch ein Verfahren zum Überführen von Behältern an eine die Behälter in Gruppen taktweise behandelnde Behandlungsmaschine, mit den Schritten: Transportieren der Behälter in einer Förderrichtung mittels einer Fördereinheit, wobei die Fördereinheit einen Schiebeabschnitt aufweist, in dem eine Gruppe von Behältern mittels einer Schiebeeinrichtung in einer quer zu der Förderrichtung ausgerichteten Schieberichtung zu der Behandlungsmaschine verschiebbar ist, Einstellen eines für die Behandlung der Gruppe von Behältern in der Behandlungsmaschine erforderlichen Teilungsabstands zwischen den Behältern mittels einer Förderschnecke, wobei die Förderschnecke entlang der Fördereinheit ausgerichtet ist, wobei die Förderschnecke zumindest teilweise in den Schiebeabschnitt hineinragt, und wobei die Förderschnecke zumindest einen Aussparungsbereich aufweist, in dem die Förderschnecke einen verringerten Außenumfang aufweist, und Verschieben der Gruppe von Behältern in Schieberichtung von der Fördereinheit zu der Behandlungsmaschine mittels der Schiebeeinrichtung, die Schiebeeinrichtung zum Verschieben zumindest eines von der Gruppe von Behältern von der Fördereinheit zu der Behandlungsmaschine in Schieberichtung zumindest abschnittsweise durch den Aussparungsbereich hindurchgeführt wird, wobei die Förderschnecke eine Mehrzahl von Aussparungsbereichen aufweist, wobei die Anzahl der Aussparungsbereiche der doppelten Anzahl der Behälter in der Gruppe von Behältern entspricht.

Unter einer Behandlungsmaschine wird vorliegend eine Maschine verstanden, die zum Behandeln von Behältern eingesetzt wird. Dies kann beispielsweise eine Maschine zum Befüllen der Behälter mit Fluiden, eine Maschine zum Etikettieren der Behälter und/oder eine Maschine zum Verschließen der Behälter sein.

Die Behandlungsmaschine weist zum Behandeln der Behälter üblicherweise sogenannte Behandlungsorgane auf, die einen bestimmten Abstand, den sogenannten Teilungsabstand, zueinander aufweisen. Zur Behandlung der Behälter in der Behandlungsmaschine, ist es daher erforderlich, die Behälter vor Behandlung in der Behandlungsmaschine so anzuordnen, dass der Abstand zwischen den Behältern dem Teilungsabstand entspricht. Dabei kann der Teilungsabstand z.B. dem Abstand zwischen den Mittelachsen der Behälter entsprechen, wobei die Behälter im Bereich der Mittelachsen entsprechende Befüllöffnungen zum Befüllen der Behälter aufweisen.

Bei der erfindungsgemäßen Vorrichtung ist die Behandlungsmaschine in Schieberichtung auf einer Seite der Fördereinheit, die beispielsweise als Förderband ausgebildet sein kann, angeordnet. Auf der gegenüberliegenden Seite der Fördereinheit ist die Schiebeeinrichtung angeordnet, die dazu ausgebildet ist, die Gruppe von Behältern in Schieberichtung von der Fördereinheit zu der Behandlungsmaschine zu verschieben. Die Förderschnecke ragt zumindest teilweise in den Schiebeabschnitt hinein. Mit anderen Worten befindet sich die Förderschnecke damit zwischen der Schiebeeinrichtung und der Behandlungsmaschine. Durch diese Anordnung der Förderschnecke würde bei bekannten Überführungsvorrichtungen das Verschieben der Behälter von der Fördereinheit zu der Behandlungsmaschine verhindert werden, da ein Zugriff der Schiebeeinrichtung auf die Behälter durch die zwischengelagerte Förderschnecke verhindert wird.

Erfindungsgemäß weist die Förderschnecke jedoch zumindest einen Aussparungsbereich auf, in dem die Förderschnecke einen verringerten Außenumfang aufweist. Mit Hilfe des Aussparungsbereichs wird ein Zugriff der Schiebeeinrichtung auf die Behälter, und somit ein Verschieben der Behälter von der Fördereinheit zu der Behandlungsmaschine ermöglicht.

Durch die zumindest teilweise Anordnung der Förderschnecke in dem Schiebeabschnitt kann eine sehr platzsparende Lösung erzielt werden. Bei einem Wechsel der Behältergröße ist lediglich die Förderschnecke entsprechend anzupassen.

In dieser Ausführungsform ist die Schiebeeinrichtung dazu ausgebildet, durch den Aussparungsbereich hindurch auf den Behälter einzuwirken, um den Behälter in Schieberichtung von der Fördereinheit zu der Behandlungsmaschine zu verrücken. Dabei kann der Aussparungsbereich beispielsweise als Ringnut ausgeführt sein, wobei die Ringnut einen geringeren Außenumfang als die übrigen Bereiche der Förderschnecke aufweist. Alternativ kann die Förderschnecke in dem Aussparungsbereich ein oder mehrere Verbindungselemente aufweisen, die gegenüber den übrigen Bereichen der Förderschnecke einen verringerten Außenumfang definieren. Vorzugsweise ist ferner eine Längsachse des Aussparungsbereichs rechtwinklig zu der Schieberichtung ausgerichtet. Dadurch kann die Schiebeeinrichtung zumindest abschnittsweise in Schieberichtung durch den Aussparungsbereich hindurchgeführt werden.

Des Weiteren sind jedem der Behälter in der Gruppe von Behältern zwei Aussparungsbereiche zugeordnet. Damit kann die Schiebeeinrichtung zumindest abschnittsweise durch zwei Aussparungsbereiche hindurchgeführt werden, um auf einem Behälter eine Kraft auszuüben, wodurch der Behälter zu der Behandlungsmaschine überführt wird. Aufgrund der zwei Angriffspunkte für die von der Schiebeeinrichtung ausgeübte Kraft wird ein Verkippen des Behälters beim Schiebevorgang verhindert.

Da die Schiebeeinrichtung zum Verschieben der Behälter zumindest abschnittsweise durch den Aussparungsbereich hindurchgeführt wird, kann eine sehr kompakte Bauweise der Vorrichtung erzielt werden.

Die Aufgabe der Erfindung wird somit vollständig gelöst.

Gemäß einer weiteren Ausführungsform ist jeder der Behälter ein Transportkorb mit einer darin aufgenommenen Fluidaufnahmevorrichtung.

Die Fluidaufnahmevorrichtung kann beispielsweise ein Gefäß, z.B. eine Flasche, sein, das zur Aufnahme eines Fluids ausgebildet ist. Die Fluidaufnahmevorrichtung ist lösbar an dem Transportkorb festgelegt. Der Transportkorb wiederum wird von der Fördereinheit in der Förderrichtung transportiert. Die Schiebeeinrichtung wirkt auf den Transportkorb ein, um den Transportkorb zusammen mit der darin aufgenommenen Fluidaufnahmevorrichtung in Schieberichtung von der Fördereinheit zu der Behandlungsmaschine zu verschieben. Der Teilungsabstand ist in dieser Ausführungsform über den Abstand zwischen den Fluidaufnahmevorrichtungen definiert. Mit Hilfe der Transportkörbe können auch Fluidaufnahmevorrichtungen überführt bzw. behandelt werden, die für sich genommen nicht stabil transportiert und/oder verschoben werden könnten.

In einer weiteren Ausführungsform bilden die Förderrichtung und die Schieberichtung in einer Betriebsposition der Vorrichtung eine im Wesentlichen waagerechte Ebene.

Mit anderen Worten werden die Behälter in dieser Ausführungsform im Wesentlichen waagerecht mit Hilfe der Fördereinheit transportiert und anschließend mit Hilfe der Schiebeeinrichtung seitlich zu der Behandlungsmaschine versetzt.

Gemäß einer weiteren Ausführungsform weist die Förderschnecke ein Schneckengewinde auf, wobei der Teilungsabstand zwischen den Behältern in Abhängigkeit einer Steigung des Schneckengewindes einstellbar ist.

Dabei gilt, dass der Teilungsabstand größer wird, wenn eine größere Steigung des Schneckengewindes gewählt wird. Insbesondere gilt, dass der Teilungsabstand in Bezug auf die Abmessung der verwendeten Behälter bzw. Transportkörbe lediglich vergrößert werden kann.

Aufgrund des Schneckengewindes weist die Förderschnecke einen äußeren Durchmesser und einen Kerndurchmesser auf, wobei der Kerndurchmesser kleiner ist als der äußere Durchmesser. In dem Aussparungsbereich weist die Förderschnecke ferner einen Außenumfang auf, der kleiner ist als der Kerndurchmesser.

Besonders bevorzugt weisen die Aussparungsbereiche in Förderrichtung jeweils einen axialen Abstand zueinander auf, der dem Teilungsabstand der Behälter entspricht.

Damit kann die Schiebeeinrichtung so angeordnet werden, dass zumindest Teile der Schiebeeinrichtung in Schieberichtung durch die Aussparungsbereiche hindurchgeführt werden können, um die Behälter zu der Behandlungsmaschine zu verschieben. Jedem der Behälter aus der Gruppe von Behältern ist in dieser Ausführungsform genau ein Aussparungsbereich zugeordnet.

In einer weiteren Ausführungsform weist die Schiebeeinrichtung zumindest eine Schiebeeinheit auf.

Ist beispielsweise nur eine Schiebeeinheit vorhanden, so werden alle Behälter in der Gruppe von Behältern von dieser einen Schiebeeinheit zu der Behandlungsmaschine überführt. In einer alternativen Ausführungsform kann die Schiebeeinrichtung eine Mehrzahl von Schiebeeinheiten aufweisen, wobei jedem der Behälter von der Gruppe von Behältern eine eigene Schiebeeinheit zugeordnet ist. Es versteht sich, dass auch eine beliebige andere Anzahl von Schiebeeinheiten vorgesehen werden kann.

Gemäß einer weiteren Ausführungsform weist die Schiebeeinheit zumindest ein Schiebeelement auf, das unterhalb und/oder oberhalb des verringerten Außenumfangs der Förderschnecke durch den Aussparungsbereich hindurchführbar ist.

Beispielsweise kann das Schiebeelement einen Stift aufweisen, der unterhalb oder oberhalb des verringerten Außenumfangs der Förderschnecke durch den Aussparungsbereich hindurchgeführt wird, um einen der Behälter von der Gruppe von Behältern von der Fördereinheit zu der Behandlungsmaschine zu verschieben. Alternativ kann das Schiebeelement U-förmig mit zwei Schenkeln ausgebildet sein, wobei einer der Schenkel des Schiebeelements unterhalb und der andere der Schenkel oberhalb des verringerten Außenumfangs der Förderschnecke durch den Aussparungsbereich hindurchführbar ist, um auf einen der Behälter von der Gruppe von Behältern einzuwirken. Durch die U-förmige Ausgestaltung des Schiebeelements wird eine Kippneigung beim Verschieben des Behälters vermindert.

Gemäß einer weiteren Ausführungsform weist die Schiebeeinheit einen Stellantrieb auf, der dazu ausgebildet ist, das zumindest eine Schiebeelement in Schieberichtung zu verschieben.

Mit Hilfe des Stellantriebs kann die Schiebeeinheit präzise in Schieberichtung bewegt werden. Somit kann ein genauer Hub für die Verschiebung der Behälter eingestellt werden.

Dabei ist der Stellantrieb vorzugsweise mechanisch, hydraulisch, pneumatisch und/oder elektrisch verstellbar.

In einer weiteren Ausführungsform weist die Vorrichtung ferner eine Steuereinheit auf, die dazu ausgebildet ist, den Stellantrieb anzusteuern.

Mit Hilfe der Steuereinheit können exakte Steuerzeiten für die Betätigung der Schiebeeinrichtung programmiert werden. Dies wiederum ermöglicht eine sehr effiziente Beschickung der Behandlungsmaschine. Beispielsweise können Füllzeiten für das Abfüllen der Behälter präzise auf eine Fördergeschwindigkeit der Fördereinheit abgestimmt werden.

In einer weiteren Ausführungsform weist die Schiebeeinrichtung eine Mehrzahl von Schiebeeinheiten auf, wobei jede der Schiebeeinheiten jeweils einem Aussparungsbereich zugeordnet ist.

In dieser Ausführungsform ist die Verschiebung jedes Behälters von der Gruppe von Behältern individuell abstimmbar. Beispielsweise wird dadurch ein zeitlicher Versatz zwischen den einzelnen Verschiebevorgängen für die Behälter ermöglicht.

Gemäß einer besonders bevorzugten Ausführungsform des Systems sind die Schiebeeinrichtung und die Behandlungsmaschine, in Schieberichtung gesehen, auf gegenüberliegenden Seiten der Fördereinheit angeordnet.

Damit kann die Schiebeeinrichtung die Gruppe von Behältern in Schieberichtung von der Fördereinheit zu der Behandlungsmaschine überführen, wobei die Schieberichtung rechtwinklig zu der Förderrichtung der Fördereinheit ausgerichtet ist.

Die Förderschnecke ragt vorzugsweise in den Schiebeabschnitt und damit in einen Bereich zwischen der Schiebeeinrichtung und der Behandlungsmaschine hinein.

Aufgrund der Aussparungsbereiche der Förderschnecke wird jedoch ein Zugriff der Schiebeeinrichtung auf die Gruppe von Behältern ermöglicht. Dies resultiert in einer platzsparenden Lösung für das System.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ferner versteht sich, dass die Merkmale, Eigenschaften und Vorteile der erfindungsgemäßen Vorrichtung auch entsprechend auf das erfindungsgemäße Verfahren zutreffen bzw. anwendbar sind.

Ausführungsbeispiele der Erfindung sind in der Zeichnung dargestellt und werden in der nachfolgenden Beschreibung näher erläutert. Es zeigen:
- Fig. 1: eine Ausführungsform eines Systems mit einer erfindungsgemäßen Vorrichtung zum Überführen von Behältern an eine Behandlungsmaschine;
- Fig. 2: eine vergrößerte Ansicht eines Ausschnitts des in Fig. 1 gezeigten Systems;
- Fig. 3: eine Detaildarstellung einer Ausführungsform einer Förderschnecke der erfindungsgemäßen Vorrichtung; und
- Fig. 4: eine Schnittansicht des in Fig. 2 gezeigten Systems.

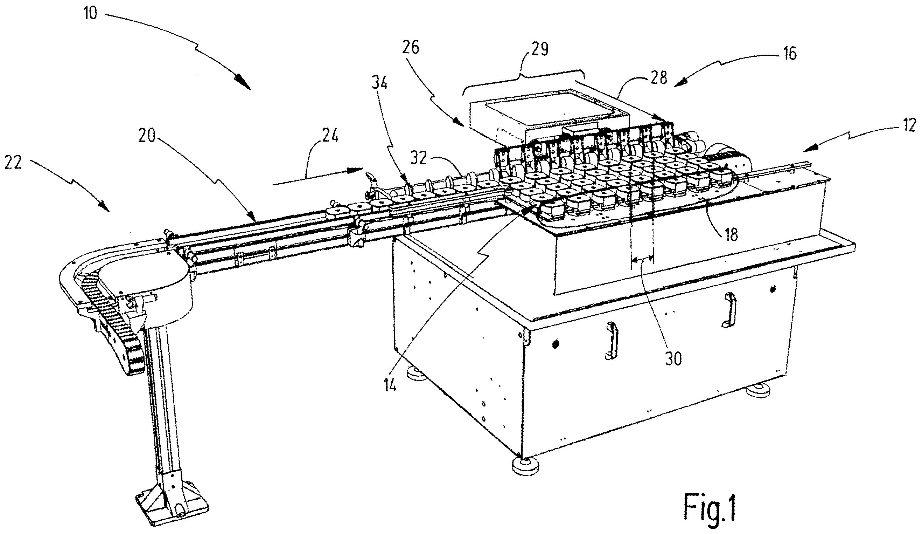

In Fig. 1 ist ein System 10 gezeigt, das eine Behandlungsmaschine 12 zur Behandlung von Behältern 14, und eine Vorrichtung 16 zum Überführen der Behälter 14 an die Behandlungsmaschine 12 aufweist.

Die Behandlungsmaschine 12 kann beispielsweise als Füllmaschine, Verschließmaschine oder Etikettiermaschine ausgebildet sein, die über in Fig. 1 nicht gezeigte Behandlungsorgane verfügt, mittels denen die Behälter 14 mit Fluiden befüllt, verschlossen und/oder etikettiert werden. Dabei ist die Behandlungsmaschine dazu ausgebildet, die Behälter 14 in Gruppen 18 taktweise zu behandeln. Mit anderen Worten werden die Behälter 14 einer Gruppe 18 in einem Arbeitstakt der Behandlungsmaschine 12 gleichzeitig z.B. mit Fluiden befüllt, verschlossen und/oder etikettiert.

In der in Fig. 1 dargestellten Ausführungsform, bilden die Behälter 14 selbst eine Fluidaufnahmevorrichtung zum Aufnehmen eines Fluids. In einer alternativen Ausgestaltung kann jeder der Behälter 14 ein Transportkorb mit einer darin aufgenommenen Fluidaufnahmevorrichtung sein. Für das beschriebene Ausführungsbeispiel soll angenommen werden, dass die Behälter 14 in der Behandlungsmaschine 12 mit einem Fluid befüllt werden. Es versteht sich, dass die Behälter 14 in weiteren nicht gezeigten Verarbeitungsstationen des Systems 10 anschließend verschlossen und etikettiert werden können.

Die Vorrichtung 16 weist ein Förderband 20 auf, das die Behälter 14 von einem Vortisch 22 in einer Förderrichtung 24 zu der Behandlungsmaschine 12 transportiert. Ferner weist die Vorrichtung 16 eine Schiebeeinrichtung 26 auf, die dazu ausgebildet ist, eine Gruppe 18 von Behältern 14 in einer Schieberichtung 28 von dem Förderband 20 zu der Behandlungsmaschine 12 zu verschieben. Dabei ist die Schieberichtung 28 quer bzw. in einem rechten Winkel zu der Förderrichtung 24 ausgerichtet. Ferner bilden die Förderrichtung 24 und die Schieberichtung 28 in einer Betriebsposition der Vorrichtung 16 eine im Wesentlichen waagerechte Ebene. Mit anderen Worten ist die Schiebeeinrichtung 26 dazu ausgebildet, die in Förderrichtung 24 einlaufenden Behälter 14 gruppenweise seitlich in Schieberichtung 28 in die Behandlungsmaschine 12 zu überführen. Dazu sind die Schiebeeinrichtung 26 und die Behandlungsmaschine 12, in Schieberichtung 28 gesehen, auf gegenüberliegenden Seiten des Förderbands 20 angeordnet. Der Bereich des Förderbands 20, in dem die Gruppe 18 von Behältern 14 von dem Förderband 20 in die Behandlungsmaschine 12 geschoben wird, soll im Folgenden als sogenannter Schiebeabschnitt 29 bezeichnet werden.

Zum Behandeln der Behälter 14 in der Behandlungsmaschine 12, müssen die Behälter 14 einen vordefinierten Teilungsabstand 30 zueinander aufweisen. Dabei wird der Teilungsabstand 30 beispielsweise als Abstand zwischen den Mittelachsen der Behälter 14 definiert. Beispielsweise kann sich im Bereich der Mittelachse eines Behälters eine Aufnahmeöffnung zum Aufnehmen eines Fluids in den Behälter 14 befinden. Da durch die Behandlungsorgane, beispielsweise Befüllorgane, der Behandlungsmaschine 12 der Teilungsabstand 30 vorgegeben wird, müssen die Behälter 14 zunächst auf den Teilungsabstand 30 eingestellt werden, bevor sie mittels der Schiebeeinrichtung 26 in die Behandlungsmaschine 12 überführt werden. Dazu weist die Vorrichtung 16 eine Förderschnecke 32 auf, die dazu ausgebildet ist, den Teilungsabstand 30 zwischen den Behältern 14 einzustellen. Die Förderschnecke 32 ist entlang des Förderbands 20, vorzugsweise parallel zu dem Förderband 20, ausgerichtet. In der in Fig. 1 dargestellten Ausführungsform der Vorrichtung 16 ragt die Förderschnecke 32 in den Schiebeabschnitt 29 hinein und überdeckt diesen komplett. In einer alternativen Ausführungsform kann die Förderschnecke 32 auch nur teilweise in den Schiebeabschnitt 29 hineinragen.

Da die Förderschnecke 32 vorliegend zwischen der Schiebeeinrichtung 26 und der Behandlungsmaschine 12 angeordnet ist, wird eine sehr kompakte Bauweise der Vorrichtung 16 und damit des Systems 10 erreicht.

Die Förderschnecke 32 weist zum Einstellen des Teilungsabstands 30 ein Schneckengewinde 34 auf. Je größer der Teilungsabstand 30 sein soll, desto größer muss die Steigung des Schneckengewindes 34 bei gleicher Länge der Förderschnecke 32 sein. Mit anderen Worten wird die Steigung des Schneckengewindes 34 in Abhängigkeit des einzustellenden Teilungsabstands 30 gewählt.

In einem Betrieb der Vorrichtung 16 werden die Behälter 14 zunächst mittels des Förderbands 20 zu dem Schiebeabschnitt 29, der sich im Bereich der Behandlungsmaschine 12 befindet, transportiert. Dabei erfolgt das Transportieren der Behälter 14 in der Förderrichtung 24. Mittels der Förderschnecke 32 wird anschließend der für die Behandlung der Gruppe 18 von Behältern 14 in der Behandlungsmaschine 12 erforderliche Teilungsabstand 30 eingestellt. In einem weiteren Schritt wird die Gruppe 18 von Behältern 14 mittels der Schiebeeinrichtung 26 in Schieberichtung 28 von dem Förderband 20 zu der Behandlungsmaschine 12 verschoben. In der Behandlungsmaschine 12 werden die Behälter 14 beispielsweise mit Hilfe von entsprechenden Abfüllorganen mit einem Fluid befüllt. Die befüllten Behälter 14 werden anschließend aus der Behandlungsmaschine 12 herausgeführt und einem möglichen weiteren Behandlungsschritt unterzogen.

In den folgenden Figuren sind weitere Ansichten bzw. Ausführungsformen der erfindungsgemäßen Vorrichtung 16 bzw. des Systems 10 gezeigt. Diese Ansichten bzw. Ausführungsformen entsprechen hinsichtlich Aufbau und Funktionsweise generell der Vorrichtung 16 bzw. des Systems 10 aus Fig. 1. Gleiche Elemente sind daher durch gleiche Bezugszeichen gekennzeichnet. Im Folgenden werden im Wesentlichen weitere Details bzw. eventuelle Unterschiede erläutert.

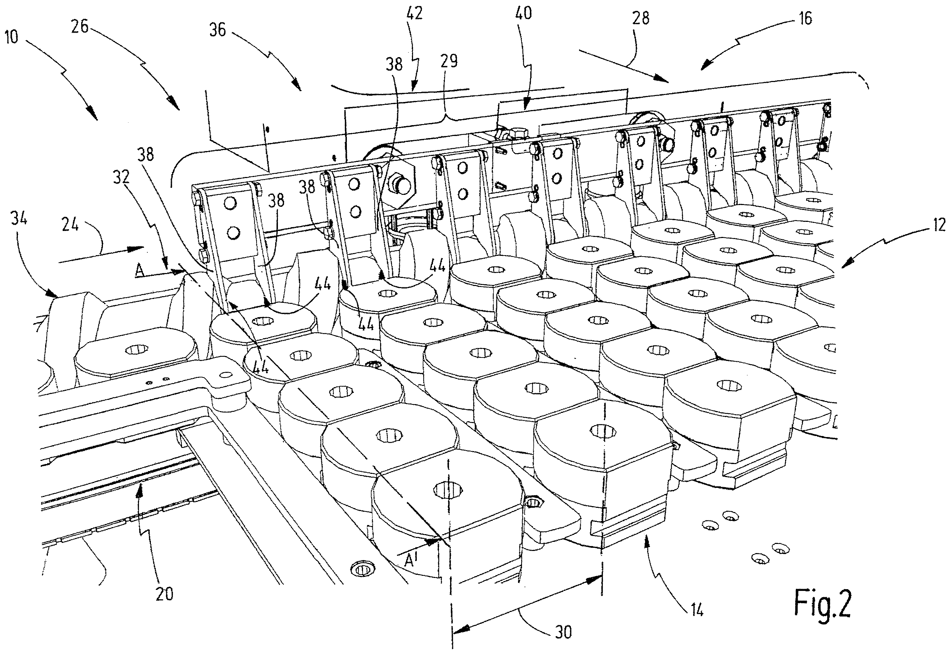

Fig. 2 zeigt eine vergrößerte Ansicht eines Ausschnitts des in Fig. 1 gezeigten Systems 10.

Wie der Fig. 2 zu entnehmen ist, weist die Schiebeeinrichtung 26 eine Schiebeeinheit 36 auf, die dazu ausgebildet ist, eine in Fig. 2 nicht näher bezeichnete Gruppe von Behältern 14 von dem Förderband 20 zu der Behandlungsmaschine 12 zu überführen. Alternativ kann die Schiebeeinrichtung 26 auch eine Mehrzahl von Schiebeeinheiten aufweisen.

Die Schiebeeinheit 36 weist eine Mehrzahl von Schiebeelementen 38 auf, wobei in Fig. 2 aus Gründen der Übersichtlichkeit nur einige der Schiebeelemente 38 mit den dazugehörigen Bezugszeichen versehen sind. In der in Fig. 2 dargestellten Ausführungsform der Vorrichtung 16 sind jeweils zwei Schiebeelemente 38 einem Behälter 14 aus der Gruppe von Behältern 14 zugeordnet. Durch die zwei Schiebeelement 38 kann ein Verkippen des Behälters 14 während des Schiebevorgangs von dem Förderband 20 zu der Behandlungsmaschine 12 vermieden werden.

Die Schiebeeinheit 36 weist ferner einen Stellantrieb 40, der dazu ausgebildet ist, die Schiebeelemente 38 in der Schieberichtung 28 zu verschieben. Durch die Verschiebung der Schiebeelemente 38 üben diese eine Kraft auf die Gruppe von Behältern 14 aus, wodurch die Gruppe von Behältern 14 von dem Förderband 20 in die Behandlungsmaschine 12 geschoben wird. Dabei ist der Stellantrieb 40 beispielsweise pneumatisch verstellbar. Alternativ kann der Stellantrieb 40 jedoch auch mechanisch, hydraulisch und/oder elektrisch verstellbar sein.

Darüber hinaus weist die Vorrichtung 16 eine Steuereinheit 42 auf, die den Stellantrieb 40 ansteuert, um die Gruppe von Behältern 14 zu der Behandlungsmaschine 12 zu überführen.

Durch die Anordnung der Förderschnecke 32 in dem Schiebeabschnitt 29 und damit zwischen der Schiebeeinrichtung 26 und der Behandlungsmaschine 12 wäre bei bekannten Systemen eine Verschiebung der Behälter 14 unmöglich, da die Förderschnecke 32 den Zugriff entsprechender Schiebeelemente auf die Behälter 14 blockiert.

Erfindungsgemäß weist die vorliegende Förderschnecke 32 daher entsprechende Aussparungsbereiche 44 auf, durch die die Schiebeelemente 38 hindurchgeführt werden können. Wie bereits bei den Schiebeelementen 38 angemerkt, sind in der Fig. 2 aus Gründen der Übersichtlichkeit nur einige der Aussparungsbereiche 44 mit den entsprechenden Bezugsziffern versehen.

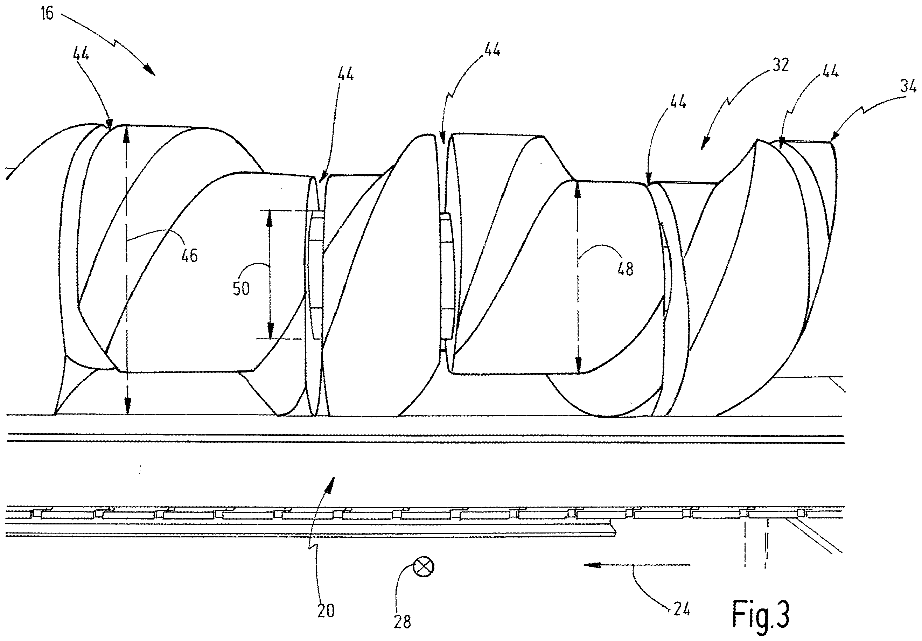

Details einer beispielhaften Ausgestaltung der Aussparungsbereiche 44 sind der Fig. 3 zu entnehmen. Dazu zeigt die Fig. 3 eine Detaildarstellung der Förderschnecke 32 von einem Blickwinkel der Schiebeeinrichtung 26 in Schieberichtung 28. Aus Übersichtlichkeitsgründen ist die Schiebeeinrichtung 26 in der Fig. 3 nicht dargestellt.

Aufgrund des Schneckengewindes 34 weist die Förderschnecke 32 einen Außendurchmesser 46 und einen Kerndurchmesser 48 auf. Wie der Fig. 3 zu entnehmen ist, weisen die Aussparungsbereiche 44 einen verringerten Außenumfang mit einem Aussparungsdurchmesser auf, der kleiner ist als der Außendurchmesser 46 und der Kerndurchmesser 48. Der Aussparungsbereich 44 kann als Ringnut ausgeführt sein. Jedoch kann der Aussparungsbereich 44 auch eine beliebige andere Form aufweisen, die zu einem verringerten Außenumfang der Förderschnecke 32 führt.

Gemäß den in den Fig. 1 bis 3 dargestellten Ausführungsformen der Vorrichtung 16 sind jeweils zwei Aussparungsbereiche 44 einem der Behälter 14 aus der Gruppe 18 von Behältern zugeordnet. Durch jeden der Aussparungsbereiche 44 kann je ein Schiebeelement 38 hindurchgeführt werden.

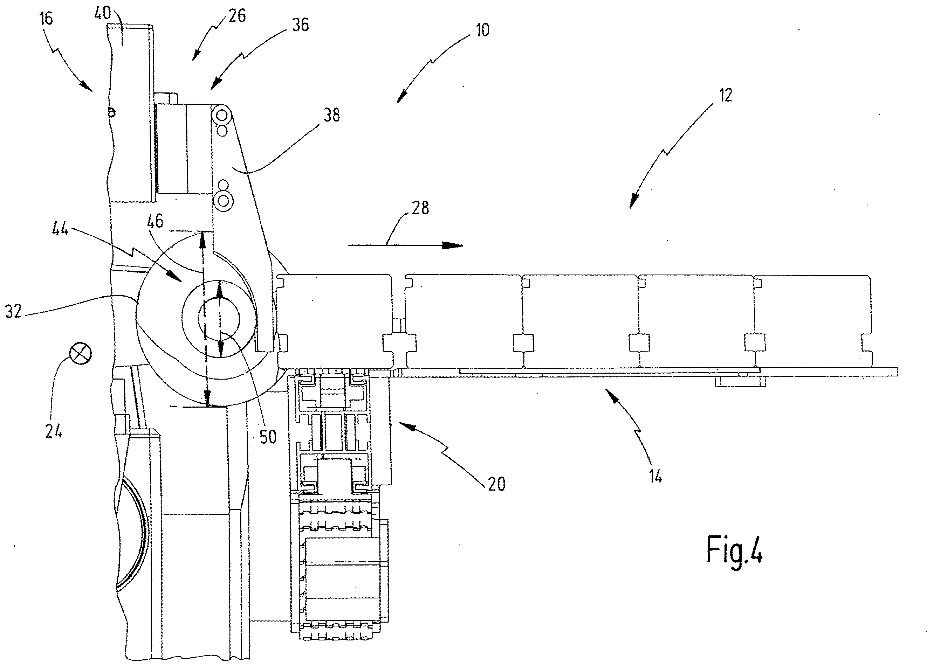

Zur Veranschaulichung der Schiebeelemente 38 und der Aussparungsbereiche 44 ist in Fig. 4 eine Schnittansicht des in Fig. 2 gezeigten Systems 10 entlang der gestrichelten Linie A-A' gezeigt.

Dieser Schnittansicht ist zu entnehmen, dass die Schiebeelemente 38 in dieser Ausführungsform oberhalb des verringerten Außenumfangs (siehe Aussparungsdurchmesser 50 in Fig. 4) durch die zugeordneten Aussparungsbereiche 44 hindurchgeführt werden. Dabei weisen die Schiebeelemente 38 eine hebelartige Form auf. In einer alternativen Ausgestaltung können die Schiebeelemente 38 auch U-förmig mit jeweils zwei Schenkeln ausgebildet sein, so dass einer der Schenkel oberhalb des verringerten Außenumfangs und der andere der Schenkel unterhalb des verringerten Außenumfangs durch den zugeordneten Aussparungsbereich 44 hindurchgeführt wird. Es versteht sich, dass die Schiebeelemente 38 auch eine beliebige andere Form aufweisen können, die es erlaubt, die Schiebeelemente 38 durch die zugeordneten Aussparungsbereiche 44 hindurchzuführen, um auf die Behälter 14 eine Kraft in Schieberichtung 28 auszuüben.

## Patentansprüche

1. System (10) mit einer Behandlungsmaschine (12) zur taktweisen Behandlung einer Gruppe (18) von Behältern (14), und einer Vorrichtung (16) zum Überführen von Behältern (14) an die die Behälter (14) in Gruppen taktweise behandelnde Behandlungsmaschine (12), wobei die Vorrichtung (16) Folgendes aufweist:
- eine Fördereinheit (20) zum Transportieren der Behälter (14) in einer Förderrichtung (24), wobei die Fördereinheit (20) einen Schiebeabschnitt (29) aufweist, in dem eine Gruppe (18) von Behältern (14) in einer quer zu der Förderrichtung (24) ausgerichteten Schieberichtung (28) zu der Behandlungsmaschine (12) verschiebbar ist,
- eine Schiebeeinrichtung (26) zum Verschieben der Gruppe (18) von Behältern (14) in Schieberichtung (28) von der Fördereinheit, (20) zu der Behandlungsmaschine (12), und
- eine Förderschnecke (32) zum Finstellen eines für die Behandlung der Gruppe (18) von Behältern (14) in der Behandlungsmaschine (12) erforderlichen Teilungsabstands (30) zwischen den Behältern (14), wobei die Förderschnecke (32) entlang der Fördereinheit (20) ausgerichtet ist, wobei die Förderschnecke (32) zumindest teilweise in den Schiebeabschnitt (29) hineinragt, und wobei die Förderschnecke (32) zumindest einen Aussparungsbereich (44) aufweist, in dem die Förderschnecke (32) einen verringerten Außenumfang aufweist,
wobei die Schiebeeinrichtung (26) zum Verschieben zumindest eines von der Gruppe (18) von Behältern (14) von der Fördereinheit (20) zu der Behandlungsmaschine (12) derart angeordnet ist, dass sie in Schieberichtung (28) zumindest abschnittsweise durch den Aussparungsbereich (44) hindurchführbar ist, wobei die Förderschnecke (32) eine Mehrzahl von Aussparungsbereichen (44) aufweist, **dadurch gekennzeichnet, dass**
die Anzahl der Aussparungsbereiche (44) der doppelten Anzahl der Behälter (14) in der Gruppe (18) von Behältern (14) entspricht.

2. System nach Anspruch 1, wobei die Förderrichtung (24) und die Schieberichtung (28) in einer Betriebsposition der Vorrichtung (16) eine im Wesentlichen waagrechte Ebene bilden.

3. System nach Anspruch loder 2, wobei die Förderschnecke (32) ein Schneckengewinde (34) aufweist, und wobei der Teilungsabstand (30) zwischen den Behältern (14) in Abhängigkeit einer Steigung des Schneckengewindes (34) einstellbar ist.

4. System nach einem der Ansprüche 1 bis 3, wobei die Aussparungsbereiche (44) in Förderrichtung, (24) jeweils einen axialen Abstand zueinander aufweisen, der dem Teilungsabstand (30) entspricht.

5. System nach einem der Ansprüche 1 bis 4, wobei die Schiebeeinrichtung (28) zumindest eine Schiebeeinheit (36) aufweist.

6. System nach Anspruch 5, wobei die Schiebeeinheit (36) zumindest ein Schiebeelement (38) aufweist, das unterhalb und/oder oberhalb des verringerten Außenumfangs der Förderschnecke (32) durch den Aussparungsbereich (44) hindurchführbar ist.

7. System nach Anspruch 6, wobei die Schiebeeinheit (36) einen Stellantrieb (40) aufweist, der dazu ausgebildet ist, das zumindest ein Schiebeelement (38) in Schieberichtung (38) zu verschieben.

8. System nach Anspruch 7, wobei der Stellantrieb (40) mechanisch, hydraulisch, pneumatisch und/oder elektrisch verstellbar ist.

9. System nach Anspruch 7 oder 8, wobei die Vorrichtung (16) ferner eine Steuereinheit (42) aufweist, die dazu ausgebildet ist, den Stellantrieb (40) anzusteuern.

10. System nach einem der Ansprüche 5 bis 9, wobei die Schiebeeinrichtung (26) eine Mehrzahl von Schiebeeinheiten (36) aufweist, wobei jede der Schiebeeinheiten (36) jeweils einem Aussparungsbereich (44) zugeordnet ist.

11. System nach einem der Ansprüche 1 bis 10, wobei die Schiebeeinrichtung (26) und die Behandlungsmaschine (1.2), in Schieberichtung (28) gesehen, auf gegenüberliegenden Seiten der Fördereinheit (20) angeordnet sind.

12. System nach einem der Ansprüche 1 bis 11, wobei die Förderschnecke (32) zwischen die Schiebeeinrichtung (26) und die Behandlungsmaschine (12) hineinragt.

13. Verfahren zum Überführen von Behältern (14) an eine die Behälter (14) in Gruppen taktweise behandelnde Behandlungsmaschine (12), mit den Schritten:
- Transportieren der Behälter (14) in einer Förderrichtung (24) mittels einer Fördereinheit (20), wobei die Fördereinheit (20) einen Schiebeabschnitt (29) aufweist, in dem eine Gruppe (18) von Behältern (14) mittels einer Schiebeeinrichtung (26) in einer quer zu der Förderrichtung (24) ausgerichteten Schieberichtung (28) zu der Behandlungsmaschine (12) verschiebbar ist,
- Einstellen eines für die Behandlung der Gruppe (18) von Behältern (14) in der Behandlungsmaschine (12) erforderlichen Teilungsabstands (30) zwischen den Behältern (14) mittels einer Förderschnecke (32), wobei die Förderschnecke (32) entlang der Fördereinheit (20) ausgerichtet ist, wobei die Förderschnecke (32) zumindest teilweise in den Schiebeabschnitt (29) hineinragt, und wobei die Förderschnecke (32) zumindest einen Aussparungsbereich (44) aufweist, in dem die Förderschnecke (32) einen verringerten Außenumfang aufweist, und
- Verschieben der Gruppe (18) von Behältern (14) in Schieberichtung (28) von der Fördereinheit (20) zu der Behandlungsmaschine (12) mittels der Schiebeeinrichtung (26),
wobei die Schiebeeinrichtung (26) zum Verschieben zumindest eines von der Gruppe (18) von Behältern (14) von der Fördereinheit (20) zu der Behandlungsmaschine (12) in Schieberichtung (28) zumindest abschnittsweise durch den Aussparungsbereich (44) hindurchgeführt wird, wobei die Förderschnecke (32) eine Mehrzahl von Aussparungsbereichen (44) aufweist, **dadurch gekennzeichnet, dass**
die Anzahl der Aussparungsbereiche (44) der doppelten Anzahl der Behälter (14) in der Gruppe (18) von Behältern (14) entspricht.

## Claims

1. System (10) having a handling machine (12) for cyclically handling a group (18) of containers (14), and an apparatus (16) for transferring containers (14) to a handling machine (12) that handles the containers (14) cyclically in groups, wherein the apparatus (16) comprises:
- a conveying unit (20) for transporting the containers (14) in a conveying direction (24), wherein the conveying unit (20) has a sliding section (29) in which a group (18) of containers (14) is displaceable towards the handling machine (12) in a sliding direction (28) oriented transversely to the conveying direction (24),
- a sliding device (26) for displacing the group (18) of containers (14) from the conveying unit (20) to the handling machine (12) in the sliding direction (28), and
- a screw conveyor (32) for setting a pitch spacing (30) between the containers (14), said pitch spacing (30) being required for handling the group (18) of containers (14) in the handling machine (12), wherein the screw conveyor (32) is oriented along the conveying unit (20), wherein the screw conveyor (32) projects at least partially into the sliding section (29), and wherein the screw conveyor (32) has at least one gap region (44) in which the screw conveyor (32) has a reduced outer circumference,
wherein the sliding device (26) for displacing at least one of the containers of the group (18) of containers (14) from the conveying unit (20) to the handling machine (12) is arranged such that it is guidable at least sectionally through the gap region (44) in the sliding direction (28), wherein the screw conveyor (32) has a plurality of gap regions (44), **characterized in that** the number of gap regions (44) corresponds to twice the number of containers (14) in the group (18) of containers (14).

2. System according to Claim 1, wherein the conveying direction (24) and the sliding direction (28) form a substantially horizontal plane in an operating position of the apparatus (16).

3. System according to Claim 1 or 2, wherein the screw conveyor (32) has a worm thread (34), and wherein the pitch spacing (30) between the containers (14) is settable in dependence on a pitch of the worm thread (34).

4. Apparatus according to any of Claims 1 to 3, wherein the gap regions (44) are each at an axial spacing apart in the conveying direction (24), said spacing corresponding to the pitch spacing (30).

5. Apparatus according to one of Claims 1 to 4, wherein the sliding device (28) has at least one sliding unit (36).

6. Apparatus according to Claim 5, wherein the sliding unit (36) has at least one sliding element (38) which is guidable through the gap region (44) beneath and/or above the reduced outer circumference of the screw conveyor (32).

7. Apparatus according to Claim 6, wherein the sliding unit (36) has an actuator (40) which is configured to displace the at least one sliding element (38) in the sliding direction (38).

8. Apparatus according to Claim 7, wherein the actuator (40) is adjustable mechanically, hydraulically, pneumatically and/or electrically.

9. Apparatus according to Claim 7 or 8, wherein the apparatus (16) furthermore has a control unit (42) which is configured to actuate the actuator (40).

10. Apparatus according to one of Claims 5 to 9, wherein the sliding device (26) has a plurality of sliding units (36), wherein each of the sliding units (36) is assigned in each case to a gap region (44).

11. System according to any of Claims 1 to 10, wherein the sliding device (26) and the handling machine (12) are arranged on opposite sides of the conveying unit (20), as seen in the sliding direction (28).

12. System according to any of Claims 1 to 11, wherein the screw conveyor (32) projects in between the sliding device (26) and the handling machine (12).

13. Method for transferring containers (14) to a handling machine (12) that handles the containers (14) cyclically in groups, comprising the steps of:
- transporting the containers (14) in a conveying direction (24) by means of a conveying unit (20), wherein the conveying unit (20) has a sliding section (29) in which a group (18) of containers (14) is displaceable towards the handling machine (12) in a sliding direction (28) oriented transversely to the conveying direction (24) by means of a sliding device (26),
- setting a pitch spacing (30) between the containers (14), said pitch spacing (30) being required for handling the group (18) of containers (14) in the handling machine (12), by means of a screw conveyor (32), wherein the screw conveyor (32) is oriented along the conveying unit (20), wherein the screw conveyor (32) projects at least partially into the sliding section (29), and wherein the screw conveyor (32) has at least one gap region (44) in which the screw conveyor (32) has a reduced outer circumference, and
- displacing the group (18) of containers (14) from the conveying unit (20) to the handling machine (12) in the sliding direction (28) by means of the sliding device (26),
wherein the sliding device (26) for displacing at least one container of the group (18) of containers (14) from the conveying unit (20) to the handling machine (12) in the sliding direction (28) is guided at least sectionally through the gap region (44), wherein the screw conveyor (32) has a plurality of gap regions (44), **characterized in that** the number of gap regions (44) corresponds to twice the number of containers (14) in the group (18) of containers (14).

## Revendications

1. Système (10) avec une machine de traitement (12) destinée au traitement en cadence d'un groupe (18) de conteneurs (14), et avec un dispositif (16) destiné au transfert de conteneurs (14) vers la machine de traitement (12) qui traite en cadence les conteneurs (14) en groupes ;
dans lequel le dispositif (16) présente les éléments suivants :
- une unité de convoyage (20) destinée au transport des conteneurs (14) dans une direction de convoyage (24) ; dans lequel l'unité de convoyage (20) présente une section de coulissement (29), dans laquelle un groupe (18) de conteneurs (14) peut être déplacé vers la machine de traitement (12) dans une direction de coulissement (28) qui est alignée à la perpendiculaire de la direction de convoyage (24) ;
- un mécanisme de coulissement (26) destiné au déplacement du groupe (18) de conteneurs (14) dans la direction de coulissement (28) par l'unité de convoyage (20) vers la machine de traitement (12) ; et
- un convoyeur à vis (32) destiné au réglage d'une distance de séparation (30) entre les conteneurs (14), nécessaire pour le traitement du groupe (18) de conteneurs (14) dans la machine de traitement (12) ; dans lequel le convoyeur à vis (32) est orienté le long de l'unité de convoyage (20) ; dans lequel le convoyeur à vis (32) fait saillie, tout au moins en partie, dans la section de coulissement (29) ; et dans lequel le convoyeur à vis (32) présente tout au moins une zone d'évidement (44), dans laquelle le convoyeur à vis (32) présente une circonférence extérieure réduite ;
dans lequel le mécanisme de coulissement (26) destiné au déplacement de tout au moins l'un des groupes (18) de conteneurs (14) de l'unité de convoyage (20) vers la machine de traitement (12) est disposé de telle sorte que ledit mécanisme de coulissement peut être guidé à travers la zone d'évidement (44), tout au moins par sections, dans la direction de coulissement (28) ; dans lequel le convoyeur à vis (32) présente une pluralité de zones d'évidement (44) ; **caractérisé en ce que** le nombre de zones d'évidement (44) correspond au double du nombre des conteneurs (14) qui se trouvent dans le groupe (18) de conteneurs (14).

2. Système selon la revendication 1, dans lequel la direction de convoyage (24) et la direction de coulissement (28) forment, dans une position de service du dispositif (16), un plan pour l'essentiel horizontal.

3. Système selon la revendication 1 ou 2, dans lequel le convoyeur à vis (32) présente un filetage de vis (34) et dans lequel la distance de séparation (30) entre les conteneurs (14) peut être réglée en fonction d'une inclinaison du filetage de vis (34).

4. Système selon l'une des revendications 1 à 3, dans lequel les zones d'évidement (44) présentent respectivement une distance axiale l'une par rapport à l'autre dans la direction de convoyage (24), laquelle distance axiale correspond à la distance de séparation (30).

5. Système selon l'une des revendications 1 à 4, dans lequel le mécanisme de coulissement (28) présente tout au moins une unité de coulissement (36).

6. Système selon la revendication 5, dans lequel l'unité de coulissement (36) présente tout au moins un élément de coulissement (38) qui peut être guidé à travers la zone d'évidement (44), au-dessous et/ou au-dessus de la circonférence extérieure réduite du convoyeur à vis (32).

7. Système selon la revendication 6, dans lequel l'unité de coulissement (36) présente un actionneur (40), lequel est conçu en vue de faire coulisser tout au moins un élément de coulissement (38) dans la direction de coulissement (38).

8. Système selon la revendication 7, dans lequel l'actionneur (40) peut être ajusté de manière mécanique, hydraulique, pneumatique et/ou électrique.

9. Système selon la revendication 7 ou 8, dans lequel le dispositif (16) présente en outre une unité de commande (42), laquelle est conçue en vue de piloter l'actionneur (40).

10. Système selon l'une des revendications 5 à 9, dans lequel le mécanisme de coulissement (26) présente une pluralité d'unités de coulissement (36), dans lequel chacune des unités de coulissement (36) est respectivement associée à une zone d'évidement (44).

11. Système selon l'une des revendications 1 à 10, dans lequel le mécanisme de coulissement (26) et la machine de traitement (12), vus dans la direction de coulissement (28), sont disposés sur des faces de l'unité de convoyage (20) qui sont opposées l'une à l'autre.

12. Système selon l'une des revendications 1 à 11, dans lequel le convoyeur à vis (32) fait saillie entre le mécanisme de coulissement (26) et la machine de traitement (12).

13. Procédé destiné au transfert de conteneurs (14) vers une machine de traitement (12) qui traite en cadence les conteneurs (14) en groupes, lequel procédé comprend les phases suivantes :
- le transport des conteneurs (14) dans une direction de convoyage (24) au moyen d'une unité de convoyage (20) ; dans lequel l'unité de convoyage (20) présente une section de coulissement (29), dans laquelle un groupe (18) de conteneurs (14) peut être déplacé au moyen d'un mécanisme de coulissement (26) vers la machine de traitement (12) dans une direction de coulissement (28) qui est alignée à la perpendiculaire de la direction de convoyage (24),
- le réglage d'une distance de séparation (30) entre des conteneurs (14), nécessaire pour le traitement du groupe (18) de conteneurs (14) dans la machine de traitement (12), au moyen d'un convoyeur à vis (32) ; dans lequel le convoyeur à vis (32) est orienté le long de l'unité de convoyage (20) ; dans lequel le convoyeur à vis (32) fait saillie, tout au moins en partie, dans la section de coulissement (29) ; et dans lequel le convoyeur à vis (32) présente tout au moins une zone d'évidement (44), dans laquelle le convoyeur à vis (32) présente une circonférence extérieure réduite ; et
- le déplacement du groupe (18) de conteneurs (14) dans la direction de coulissement (28) par l'unité de convoyage (20) vers la machine de traitement (12), au moyen du mécanisme de coulissement (26) ;
dans lequel le mécanisme de coulissement (26) destiné au déplacement de tout au moins l'un des groupes (18) de conteneurs (14) par l'unité de convoyage (20) vers la machine de traitement (12) est guidé à travers la zone d'évidement (44), tout au moins par sections, dans la direction de coulissement (28) ; dans lequel le convoyeur à vis (32) présente une pluralité de zones d'évidement (44) ; **caractérisé en ce que** le nombre des zones d'évidement (44) correspond au double du nombre de conteneurs (14) qui se trouvent dans le groupe (18) de conteneurs (14).
